# EUROPÄISCHE PATENTSCHRIFT

(11) **EP 2 725 158 B1**
(45) Veröffentlichungstag und Bekanntmachung des Hinweises auf die Patenterteilung: **29.07.2015**
(21) Anmeldenummer: 13189621.9
(22) Anmeldetag: 22.10.2013
(51) Int. Cl.: E04B 1/68, H02G 13/00

(54) **Vorrichtung zur Fundamenterdung eines Gebäudes**
Device for earthing the foundations of a building
Dispositif de mise à la terre de la fondation d'un bâtiment

(30) Priorität: 29.10.2012 DE 102012021150; 11.01.2013 DE 102013000290
(43) Veröffentlichungstag der Anmeldung: 30.04.2014
(73) Patentinhaber: H-Bau Technik GmbH, 79771 Klettgau (DE)
(72) Erfinder:
(74) Vertreter: Rentsch Partner AG

(56) Entgegenhaltungen:
- DE-A1- 19 938 368
- DE-A1-102010 015 832
- DE-U1- 20 200 811
- KR-A- 20120 046 436
- "Abdichtungen", , 31. Dezember 2010 (2010-12-31), Seiten 47-52, XP055097680, Gefunden im Internet: URL:http://www.weisse-wanne.com/upload/158 5343_PL_2010_NA_Abdichtung.pdf [gefunden am 2014-01-22]
- "Abdichtung", , 31. Mai 2008 (2008-05-31), Seiten 1-48, XP055097685, Gefunden im Internet: URL:http://www.elmenhorst.de/download/Kata loge und Flyer/abdichtung_08.pdf [gefunden am 2014-01-22]
- "Pentaflex Abdichtungstechnik; Pentaflex KB Plus", , 9. Dezember 2013 (2013-12-09), Seiten 18-22, XP055097672, Gefunden im Internet: URL:http://www.h-bau.de/fileadmin/user_upl oad/produkte/abdichtungstechnik/prospekte/ Abdichtungstechnik.pdf [gefunden am 2014-01-22]
- Prof Dr ET AL: "Fugenbleche und Verbindungsmittel der H-BAU Technik zur Fundamenterdung eines Gebäudes - Ergebnisse der Prüfung der Blitzstoßstrom-Festigkeit nach DIN EN 50164-1:2009", , 20. März 2013 (2013-03-20), XP055097691, Gefunden im Internet: URL:http://www.h-bau.de/fileadmin/user_upl oad/produkte/abdichtungstechnik/pruefberic hte/20130320_Stellungnahme_Fundamenterder. pdf [gefunden am 2014-01-22]

## Beschreibung

### TECHNISCHES GEBIET

Die vorliegende Erfindung betrifft eine Verwendung eines elektrisch leitenden Fugenblechs, das in einem Gebäude mit einer betonierten Bodenplatte und einer darauf errichteten Betonwand zur Abdichtung einer Arbeitsfuge zwischen der Bodenplatte und der Betonwand entlang der Arbeitsfuge und diese quer überbrückend eingebaut ist.

### STAND DER TECHNIK

Grundvoraussetzung für eine sichere und funktionstüchtige Elektroinstallation ist ihre Erdungsanlage. Deshalb verlangen die Technischen Anschlussbedingungen (TAB) der Energieversorger sowie die DIN 18015-1 den Einbau eines Fundamenterders in Neubauten. Zusätzlich kann der Fundamenterder Erdungsaufgaben für Kommunikations-, Anntennen- und Blitzschutzanlagen übernehmen.

Die Ausführung des Fundamenterders regelt DIN 18014. Er ist in Form einer Erdleitung als geschlossener Ring in die Außenfundamente des Gebäudes einzubringen. Bei Bodenplatten ist die Erdleitung im Bereich der Außenmauern als geschlossener Ring zu verlegen. Die Erdleitung muss in der Bodenplatte so installiert werden, dass sie allseitig von Beton umschlossen und so gegen Korrosion geschützt ist. Als Material für die Erdleitung wird Rundstahl oder Bandstahl verwendet, wobei für Rundstahl ein Durchmesser von 10 mm und für Bandstahl Abmessungen von mindestens 30 x 3,5 mm gefordert werden.

Zum Anschluss der Erdleitung werden verschiedene Anschlussteile verwendet. Hierzu zählen Anschlussfahnen und Anschlussplatten wie z.B. Erdungsfestpunkte. Bei betonierten Wänden werden die Erdungsfestpunkte als Anschlussplatte in die Wand eingegossen. Häufig wird die Erdleitung mit der Bewehrung der Bodenplatte elektrisch verbunden, um diese in die Erdung mit einzubeziehen und ihre sogenannte "Erdfühligkeit" zu verbessern.

Bei Gebäuden mit einer betonierten Bodenplatte und einer darauf errichteten Betonwand ist es zudem üblich, die Arbeitsfuge zwischen der Bodenplatte und der Betonwand durch den Einbau von die Arbeitsfuge quer überbrückenden Fugenblechen abzudichten. Die Fugenbleche sind meist unter Verwendung von Stahlblech hergestellt und dabei regelmässig noch beschichtet, beispielsweise mit einer Beschichtung, wie aus DE 42 44 972 C5 bekannt ist. Beschichtungen dieser Art gehen mit Frischbeton eine wasserdichte Verbindung ein. Sie sind auf Bitumenbasis hergestellt, elektrisch nichtleitend und vor ihrem Kontakt mit dem Frischbeton stark klebrig. Aus DE 10 2010 015 832 A1 sind elektrisch leitende Fugenbelche bekannt sowie verschiedene Mittel zum Fixieren der Fugenbleche in ihrer gewünschten Einbaulage, wobei die Fugenbleche jeweils in einem Gebäude mit einer betonierten Bodenplatte und einer darauf errichteten Betonwand zur Abdichtung einer Arbeitsfuge zwischen der Bodenplatte und der Betonward entlang der Arbeitsfuge und diese quer überbrückend eingebaut sind.

### BESCHREIBUNG DER ERFINDUNG

Aufgabe der Erfindung ist es, den Aufwand hinsichtlich Material und Arbeitszeit zur Erstellung einer Fundamenterdung eines Gebäudes mit einer betonierten Bodenplatte und einer darauf errichteten Betonwand zu reduzieren. Diese Aufgabe wird erfindungsgemäss gelöst durch eine Verwendung gemäss Anspruch 1. Bei der erfindungsgemässen Verwendung wird sdas mindestens eine elektrisch leitende Fugenblech, das zur Abdichtung einer Arbeitsfuge zwischen der Bodenplatte und der Betonwand entlang der Arbeitsfuge und diese quer überbrückend eingebaut ist, zumindest als Abschnitt einer Erdleitung zur Fundamenterdung des Gebäudes durch elektrischen Anschluss an einen weiteren Abschnitt der Erdleitung und/oder an eine Anschlussfahne oder einen Erdungsfestpunkt und/oder über einen Erdstab an das Erdpotential und/oder an mindestens ein Bewehrungseisen der Bodenplatte und/oder der Betonwand verwendet.

Die Erfindung nutzt den Umstand aus, dass bei Gebäuden der betrachteten Art Erdleitungen zur Fundamenterdung und Fugenbleche zur Gebäudeabdichtung häufig parallel zueinander sowie meist auch noch im gleichen, geschlossenen Ring verlegt sind. Dabei sind die Fugenbleche, jedenfalls wenn sie unter Verwendung eines metallischen Materials wie Stahlblech hergestellt sind, ebenfalls elektrisch leitend. Sie können dadurch die Funktion einer Erdleitung zumindest abschnittsweise übernehmen. Eine parallele Erdleitung bzw. ein entsprechender Abschnitt einer parallelen Erdleitung kann dabei eingespart werden.

Vorteilhafte Ausgestaltungen der Erfindung sind in den abhängigen Ansprüchen gekennzeichnet.

Vorzugsweise wird das mindestens eine Fugenblech mittels einer Halterung elektrisch mit mindestens einem Bewehrungseisen der Bodenplatte und/oder der Betonwand verbunden, welche Halterung das mindestens eine Fugenblech in seiner vorgesehenen Einbaulage vor dem Betonieren der Bodenplatte stützt.

Das mindestens eine Fugenblech kann auch mit einer Beschichtung versehen werden. Zur Verbesserung seiner Dichtwirkung kann die Beschichtung insbesondere eine solche sein, die mit Frischbeton eine wasserundurchlässige Verbindung eingeht. Solche Beschichtungen sind in der Regel elektrisch jedoch nichtleitend. Um den elektrischen Anschluss des mindestens einen Fugenblechs dennoch auf einfache Weise zu ermöglichen, kann die Beschichtung nur teilflächig vorgesehen werden, insbesondere nur entlang einem in Einbaulage unteren Bereich des Fugenblechs. Der elektrische Anschluss kann dann im Bereich einer nicht so beschichteten Teilfläche, vorzugsweise entlang einem in Einbaulage oberen Bereich, elektrisch ausgeführt werden.

Besonders rationell ist es, wenn mehrere Fugenbleche aneinandergereiht und elektrisch miteinander verbunden werden. Sie können dabei insbesondere zu einer in sich geschlossenen Leiterschleife verbunden werden, wie dies für Fundamenterder in der Regel erforderlich ist.

Zu ihrer gegenseitigen Verbindung können die mehreren Fugenbleche insbesondere überlappend aneinandergereiht und in ihrem Überlappungsbereich jeweils mit einer Klemme mechanisch zusammengehalten und elektrisch miteinander verbunden werden. Durch die gegenseitige Überlappung kann auch die Dichtwirkung der Fugenbleche sichergestellt werden, insbesondere, wenn die Fugenbleche mit einer Beschichtung der vorgenannten Art versehen werden, die üblicherweise stark klebrige Eigenschaften hat, so dass die Fugenbleche gleichzeitig dicht miteinander verklebt werden.

Die Klemme kann insbesondere eine u-förmige Klammer aus einem elektrisch leitfähigen Blech aufweisen, in Gewindelöcher von welcher vorzugsweise vier ebenfalls elektrisch leitfähige Klemmschrauben eingedreht werden.

Zur Verbindung von zwei vollbeschichteten Fugenblechen geeignet ist eine Klemme, die ein elektrisch leitendes Vierkantrohr aufweist, welches mit zwei miteinander fluchtenden Schlitzen versehen ist, deren Breite geringer ist als die Gesamtdicke von zwei jeweils mit einer Beschichtung versehenen Fugenblechen.

Zur Überbrückung einer Dehnungsfuge können an diese angrenzende Fugenbleche jeweils mit einem Erdungsfestpunkt und über eine elektrische Verbindung zwischen diesen Erdungsfestpunkten elektrisch miteinander verbunden werden.

Unter Bezugnahme auf die Zeichnungen werden nachstehend Ausführungsbeispiels der Erfindung erläutert.

### KURZE BESCHREIBUNG DER ZEICHNUNGEN

Es zeigen:
Fig. 1 in Aufsicht eine Bodenplatte mit einer darin verlegten Erdleitung aus Fugenblechen;
Fig. 2 im Schnitt ein zur Abdichtung einer Arbeitsfuge zwischen einer Bodenplatte und einer darauf errichteten Aussenwand sowie als Abschnitt einer Erdleitung verwendetes und mit einem Erdungsfestpunkt elektrisch leitend verbundenes Fugenblech;
Fig. 3 in perspektivischer Darstellung zwei überlappend elektrisch leitend miteinander verbundene Fugenbleche;
Fig. 4 in einer Darstellung gemäss Fig. 2 ein als Abschnitt einer Erdleitung verwendetes und mit einem Erdspiess elektrisch leitend verbundenes Fugenblech;
Fig. 5 im Schnitt zwei als Abschnitt einer Erdleitung verwendete und in ihrem Überlappungsbereich elektrisch leitend miteinander sowie mit einem Bewehrungseisen der Bodenplatte verbundene Fugenbleche;
Fig. 6 im Schnitt zwei als Abschnitt einer Erdleitung verwendete und in ihrem Überlappungsbereich elektrisch leitend miteinander sowie einem Bewehrungseisen der Aussenwand verbundene Fugenbleche;
Fig. 7 eine weitere Ausführungsform einer Klemme; und
Fig. 8 eine Ausführungsform einer Klemme für vollbeschichtete Fugenbleche.

### WEGE ZUR AUSFÜHRUNG DER ERFINDUNG

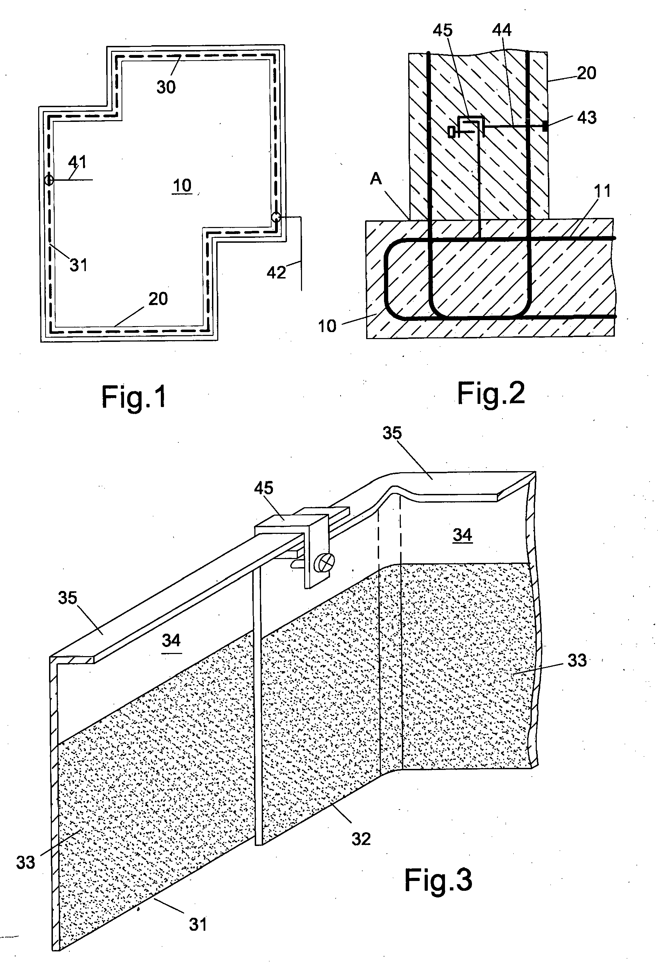

Eine erfindungsgemässe Verwendung zeigt Fig. 1, wobei 10 eine Bodenplatte eines Gebäudes aus Stahlbeton bezeichnet. Entlang von deren äusserem Rand ist eine Reihe 30 von Fugenblechen verlegt, von denen lediglich eines mit 31 bezeichnet ist. Die Fugenbleche 31 dienen zur Abdichtung der sich zwischen der Bodenplatte 10 und einer drauf ebenfalls aus bewehrtem Beton errichteten Aussenwand 20 ergebenden Arbeitsfuge A gegen eindringendes Wasser. Sie sind dazu, die Arbeitsfuge A querend, im Beton beider Betonbauteile 10, 20 eingebettet. Die Fugenbleche 31 überlappen sich gegenseitig an ihren Enden. Die Fugenbleche können, müssen aber nicht einen in sich geschlossenen, nach allen Seiten hin wasserdichten Ring bilden. Sofern Dehnfugen vorhanden sind, müssen diese gegebenenfalls sowieso speziell überbrückt werden.

Die Fugenbleche 31 bestehen aus oder weisen zumindest eine Lage aus einem elektrisch leitenden Metallblech von typisch 1 - 3 m Länge, 100 - 200 mm Höhe und 0,5 - 1,2 mm Dicke auf. Erfindungsgemäss ist wenigstens eines der Fugenbleche 31 als Abschnitt einer Erdleitung zur Fundamenterdung des auf der Bodenplatte 10 errichteten Gebäudes verwendet. Vorzugsweise sind jedoch mehrere und weiter vorzugsweise alle Fugenbleche 31 elektrisch leitend miteinander verbunden und bilden dadurch einen längeren Abschnitt oder gar eine in sich geschlossene Ringleitung einer Erdleitung zur Fundamenterdung. Die gegenseitige elektrische Verbindung der Fugenbleche 31 ist vorzugsweise in deren gegenseitigem Überlappungsbereich durch direkte Anlage aneinander hergestellt. Gegebenenfalls, beispielsweise wieder zur Überbrückung von Dehnfugen, kann die elektrische Verbindung jedoch auch durch anderweitige Mittel hergestellt sein.

An mindestens einem der Fugenbleche 31 ist, vorzugsweise in elektrischer Verbindung mit der gesamten Reihe 30, eine Anschlussfahne 41 vorgesehen, welche aus der Aussenwand 20 in das Gebäude hineingeführt ist und an welcher die übrige Elektroinstallation des Gebäudes zu Erdungszwecken angeschlossen werden kann. Fig. 1 zeigt zusätzlich einen, vorzugsweise ebenfalls in elektrischer Verbindung mit der gesamten Reihe 30 stehenden, in das angrenzende Erdreich eingelassenen Erder 42 zur Verbesserung von deren Erdfühligkeit. Dies kann auch eine ausgedehnte Aussenerdungsanlage sein, an der noch andere Anschlüsse vorhanden sein können. Ein solcher Erder oder eine solche Aussenerdungsanlage ist jedoch nicht immer erforderlich. Anstelle der Anschlussfahne 41 könnte auch ein an der Innenseite der Aussenwand 20 angeordneter Erdungsfestpunkt vorgesehen sein.

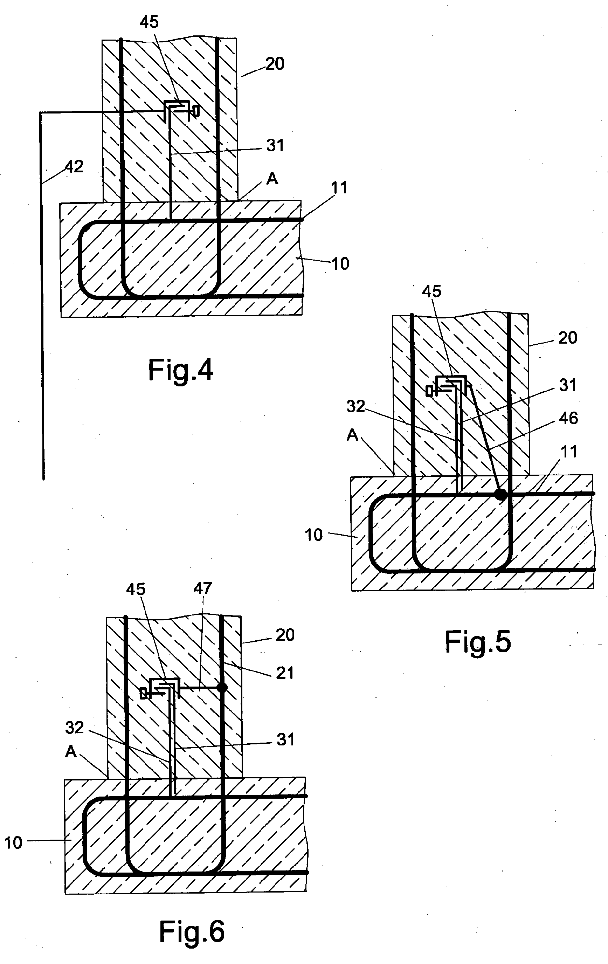

Fig. 2 zeigt ein Fugenblech 31 zur Abdichtung einer Arbeitfuge A zwischen einer Bodenplatte 10 und einer darauf errichteten Aussenwand 20, wobei das Fugenblech 31 erfindungsgemäss gleichzeitig zumindest als Abschnitt einer Erdleitung zur Fundamenterdung des auf der Bodenplatte 10 errichteten Gebäudes verwendet ist. Das Fugenblech 31 ist dazu mit einem Erdungsfestpunkt 43 der bereits erwähnten Art an der Innenseite der Wand 20 elektrisch leitend verbunden. Die Verbindung ist mit einem elektrischen Leiter 44 hergestellt, der mittels einer Klemme 45 an das Fugenblech 31 angeschlossen ist. In entsprechender Weise und wie in Fig. 4 dargestellt, könnte der Erder 42 mit einem Fugenblech 31 verbunden sein. Durch eine elektrisch leitende Verbindung zweier Erdungsfestpunkte 41 mit einem flexiblen elektrischen Leiter ausserhalb der Aussenwand 20 könnten auch zwei Fugenbleche beidseits einer Dehnungsfuge elektrisch miteinander verbunden werden.

Fig. 3 zeigt beispielhaft zwei sich gegenseitig überlappende Fugenbleche 31 und 32, die jeweils Abschnitte einer Erdleitung zur Fundamenterdung bilden sollen. Sie sind dazu in ihrem Überlappungsbereich elektrisch leitend miteinander verbunden. Der gegenseitige elektrische Kontakt kann hierbei durch die direkte Anlage der beiden Fugenbleche 31, 32 aneinander und/oder durch eine Klemme 45 hergestellt sein. Die Klemme 45 dient auch dazu, die beiden Fugenbleche 31, 32 mechanisch zusammenzuhalten.

Die Fugenbleche 31, 32 von Fig. 3 sind, vorzugsweise jeweils beidseitig, mit einer Beschichtung 33 versehen, die ihre Dichtwirkung verbessert, indem sie mit frischem Beton eine wasserdichte Verbindung eingeht. Beschichtungen dieser Art sind, zumindest bevor sie mit Frischbeton in Kontakt kommen, stark klebrig. Eine wasserdichte Verbindung zwischen den beiden Fugenblechen 31, 32 kann in diesem Fall einfach durch ihre gegenseitige Verklebung mittels der Beschichtung 33 erreicht werden. Die Beschichtung 33 ist andererseits jedoch elektrisch nichtleitend, wodurch sie elektrisch isolierend zwischen den Fugenblechen 31, 32 wirkt. Um die Fugenbleche 31, 32 auf die beschriebene Art elektrisch miteinander verbinden zu können, ist die Beschichtung 33 auf den Fugenblechen 31, 32 nur teilflächig unter Belassung eines freien Streifens 34 entlang von deren oberem Rand aufgebracht. An diesem Rand ist auch noch ein schmaler Streifen 35 abgekantet, der die Fugenbleche 31, 32 in Längsrichtung aussteift.

Fugenbleche wie die bereits betrachteten müssen üblicherweise vor dem Betonieren zumindest der Bodenplatte 10 in ihrer gewünschten Einbaulage mechanisch abgestützt werden. Die Figuren 2 und 4 zeigten jeweils ein Fugenblech 31 senkrecht stehend auf der oberen Bewehrungslage 11 der Bodenplatte 10. Wie dies in den Figuren 5 und 6 dargestellt ist, können im Rahmen der Erfindung die in den Überlappungsbereichen zweier Fugenbleche 31, 32 zur Herstellung eines ausreichenden gegenseitigen elektrischen Kontaktes sowieso gegebenenfalls erforderlichen Klemmen wie die Klemmen 45 zur mechanischen Stützung der Fugenbleche mit verwendet werden. Dazu sind die Klemmen 45 mit Haltearmen 46 bzw. 47 oder dergleichen versehen, mit denen eine mechanische Verbindung zu Bewehrungen 11 der Bodenplatte 10 oder 21 der Aussenwand 20 hergestellt werden kann.

Vorzugsweise sind auch diese Haltearme 46, 47 oder dergleichen elektrisch leitend, so dass über sie eine elektrisch leitende Verbindung zu den ja auch elektrisch leitfähigen Bewehrungen 11 bzw. 21 hergestellt werden kann. Durch eine Vielzahl solcher über einen längeren Abschnitt einer Erdleitung zur Fundamenterdung verteilter Verbindungen lässt sich die Qualität der Erdung zusätzlich verbessern. In den Figuren 5 und 6 ist die Anbindung der Haltearme 46, 47 an die Bewehrungen 11, 21 lediglich schematisch durch einen Punkt dargestellt. Zum Einsatz können auch hier Klemmen kommen oder es könnten die Haltearme mit den Bewehrungen verschweisst werden.

Wie bereits erwähnt, ist für eine Erdleitung bei Verwendung von Rundstahl ein Durchmesser von 10 mm und bei Verwendung von Bandstahl Abmessungen von mindestens 30 x 3,5 mm vorgeschrieben. Mit Fugenblechen der beschriebenen Art, insbesondere solchen mit einer Höhe von 167 mm und einer Dicke von 0,6 mm, lassen sich ausreichende Querschnitte für die elektrische Leitung realisieren.

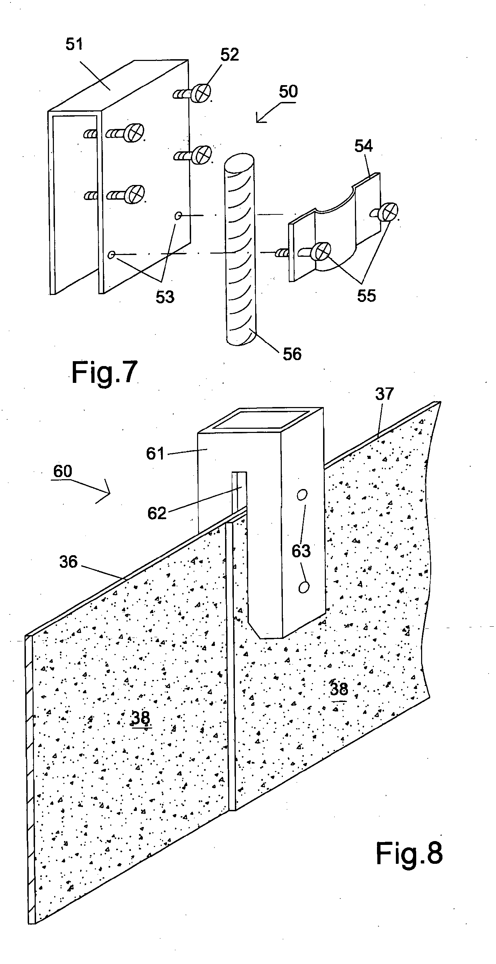

Fig. 7 zeigt eine weitere Ausführungsform einer Klemme 50, die funktionell entsprechend der Klemme 45 ausgebildet ist und anstelle dieser in den vorbeschriebenen Beispielen auch verwendet werden könnte. Sie weist eine u-förmige Klammer 51 aus einem elektrisch leitfähigen Blech auf. In Gewindelöcher dieser Klammer sind vier ebenfalls elektrisch leitfähige Klemmschrauben eingedreht, von denen eine mit 52 bezeichnet ist. Die Klammer 51 wird von oben auf zwei sich überlappende Fugenbleche in deren Überlappungsbereich aufgesteckt und durch Anziehen der vier Schrauben 52 befestigt. Über den mit den vier Schrauben 52 erreichbaren Klemmdruck werden eine feste mechanische Verbindung und ein guter elektrischer Kontakt der beiden Fugenbleche miteinander erzielt. Die Klemme 50 könnte natürlich auch zum elektrischen Anschluss nur eines Fugenblechs verwendet werden. So wie in Fig. 7 dargestellt, ist die Klemme eher für Fugenbleche ohne einen abgekanteten Streifen wie den Streifen 35 von Fig. 3 ausgebildet. Um die Klemme 50 auch für Fugenbleche mit einem solchen abgekanteten Streifen einsetzen zu können, müsste der gegenseitige Abstand der beiden Schenkel der u-förmigen Klammer 51 gegebenenfalls vergrössert werden. Die Klemme 50 ist vorzugsweise und wie auch dargestellt mit noch zwei weiteren Gewindelöchern 53 versehen, an denen bei Bedarf ein Schellenbügel 54 mit zwei weiteren Schrauben 55 befestigt werden kann. Mit einem solchen Schellenbügel lässt sich auf einfache Weise ein stabförmiger elektrischer Leiter 56 wie beispielsweise der Erder 42, der Leiter 44 und/oder die Haltearme 46 oder 47 mechanisch und elektrisch leitend anschliessen. Der Schellenbügel 54 oder ein weiterer Schellenbügel könnten auch mittels der Schrauben 52 angeschraubt werden. Auf die weiteren Gewindelöcher 53 könnte deshalb gegebenenfalls verzichtet werden.

Fig. 8 zeigt eine Ausführungsform einer Klemme 60, die für vollbeschichtete Fugenbleche verwendbar ist. Sie wird gebildet durch ein metallisches und dadurch wieder elektrisch leitendes Vierkantrohr 61, das mit zwei miteinander fluchtenden Schlitzen 62 versehen ist, so dass wiederum eine Art u-förmige Klammer entsteht. Die Breite der Schlitze 62 ist etwas geringer als die Gesamtdicke zweier beschichteter Fugenbleche. Die Klemme 60 wird von oben, beispielsweise mit einem Hammer, im Überlappungsbereich zweier Fugenbleche wie der Fugenbleche 36 und 37 in Fig. 8 auf diese aufgetrieben. Hierbei schneiden die Kanten der Schlitze 62 in die Beschichtung 38 ein und machen mit dem elektrisch leitenden Kern der Fugenbleche jeweils elektrischen Kontakt. Die beiden Fugenbleche 36, 37 sind danach über die Klemme 60 nicht nur mechanisch aneinander fixiert sondern auch elektrisch miteinander verbunden. Vorzugweise und wie dargestellt sind wieder Gewindelöcher 63 vorgesehen, an welchen wie bei der Klemme 50 von Fig. 7 ein Schellenbügel zum Anschluss eines stabförmigen Leiters angeschraubt werden könnte. Die Klemme 60 könnte auch mit engeren Schlitzen versehen und dadurch an die Dicke nur eines einzelnen Fugenblechs angepasst sein.

### BEZUGSZEICHENLISTE

- 10: Bodenplatte
- 11: Bewehrung
- 20: Aussenwand
- 21: Bewehrung
- 30: Reihe 30 von Fugenblechen
- 31, 32: Fugenbleche
- 33: Beschichtung
- 34: freier Streifen
- 35: abgekanteter Streifen
- 36, 37: Fugenbleche
- 38: Beschichtung
- 41: Anschlussfahne/Erdungsfestpunkt
- 42: Erder
- 43: Erdungsfestpunkt
- 44: Leiter
- 45: Klemme
- 46, 47: Haltearme
- 50: Klemme
- 51: Klammer
- 52: Klemmschrauben
- 53: Gewindelöcher
- 54: Schellenbügel
- 55: Schrauben
- 56: Leiter
- 60: Klemme
- 61: Vierkantrohr
- 62: Schlitze
- 63: Gewindelöcher
- A: Arbeitsfuge

## Patentansprüche

1. Verwendung eines elektrisch leitenden Fugenblechs, das in einem Gebäude mit einer betonierten Bodenplatte (10) und einer darauf errichteten Betonwand (20) zur Abdichtung einer Arbeitsfuge (A) zwischen der Bodenplatte (10) und der Betonwand (20) entlang der Arbeitsfuge (A) und diese quer überbrückend eingebaut ist, zumindest als Abschnitt einer Erdleitung (30) zur Fundamenterdung des Gebäudes durch elektrischen Anschluss an einen weiteren Abschnitt der Erdleitung und/oder an eine Anschlussfahne (41) oder einen Erdungsfestpunkt und/oder über einen Erdstab (42) an das Erdpotential und/oder an mindestens ein Bewehrungseisen (11, 12) der Bodenplatte (10) und/oder der Betonwand (20).

2. Verwendung nach Anspruch 1, **dadurch gekennzeichnet, dass** das mindestens eine Fugenblech (31,32) mittels einer Halterung (46, 47) elektrisch mit mindestens einem Bewehrungseisen (11) der Bodenplatte (10) und/oder (21) der Betonwand (20) verbunden wird, welche Halterung (46, 47) das mindestens eine Fugenblech (31, 32) in seiner vorgesehenen Einbaulage vor dem Betonieren der Bodenplatte (10) stützt.

3. Verwendung nach einem der Ansprüche 1 - 2, **dadurch gekennzeichnet, dass** das mindestens eine Fugenblech (31. 32) auf einer Teilfläche, vorzugsweise entlang einem in Einbaulage unteren Bereich, mit einer nichtleitenden Beschichtung (33) versehen und im Bereich einer anderen, nicht so beschichteten Teilfläche (34), vorzugsweise entlang einem in Einbaulage oberen Bereich, elektrisch angeschlossen wird.

4. Verwendung nach Anspruch 3, **dadurch gekennzeichnet, dass** die nichtleitende Beschichtung (33) eine Beschichtung ist, die mit Frischbeton eine wasserundurchlässige Verbindung eingeht.

5. Verwendung nach einem der Ansprüche 1 - 4, **dadurch gekennzeichnet, dass** mehrere Fugenbleche (31, 32) aneinandergereiht und elektrisch miteinander verbunden werden.

6. Verwendung nach Anspruch 5, **dadurch gekennzeichnet, dass** mehrere Fugenbleche (31, 32) zu einer in sich geschlossenen Leiterschleife (30) verbunden werden.

7. Verwendung nach einem der Ansprüche 5 oder 6, **dadurch gekennzeichnet, dass** mehrere Fugenbleche (31, 32) überlappend aneinandergereiht und in ihrem Überlappungsbereich jeweils mit einer Klemme (45, 50, 60) mechanisch zusammengehalten und/oder elektrisch miteinander verbunden werden.

8. Verwendung nach Anspruch 7, **dadurch gekennzeichnet, dass** die Klemme (50) eine u-förmige Klammer (51) aus einem elektrisch leitfähigen Blech aufweist, in Gewindelöcher von welcher vorzugsweise vier ebenfalls elektrisch leitfähige Klemmschrauben (52) eingedreht sind.

9. Verwendung nach Anspruch 7, **dadurch gekennzeichnet, dass** die Klemme (60) ein elektrisch leitendes Vierkantrohr (61) aufweist, welches mit zwei miteinander fluchtenden Schlitzen (62) versehen ist, deren Breite geringer ist als die Gesamtdicke von zwei jeweils mit einer Beschichtung (38) versehenen Fugenblechen (36, 37).

10. Verwendung nach einem der Ansprüche 8 oder 9, **dadurch gekennzeichnet, dass** die Klemme (50, 60) mit einem Schellenbügel (54) zum Anschluss eines stabförmigen elektrischen Leiters (56) versehen ist.

11. Verwendung nach einem der Ansprüche 5-10, **dadurch gekennzeichnet, dass** zur Überbrückung einer Dehnungsfuge an diese angrenzende Fugenbleche jeweils mit einem Erdungsfestpunkt (43) und über eine elektrische Verbindung zwischen diesen Erdungsfestpunkten elektrisch miteinander verbunden werden.

## Claims

1. A use of an electrically conducting joint plate fitted in a building with a concrete floor slab (10) and a concrete wall (20) erected thereon for sealing a construction joint (A) between the floor slab (10) and the concrete wall (20) along the construction joint (A) and transversely bridging the same, at least as a section of a ground cable (30) for foundation grounding of the building through electrically connecting it to a further section of the ground cable and/or to a terminal lug (41) or a ground clip and/or to the earth potential via an earthing rod (42) and/or to at least one metal bar (11, 12) of the floor slab (10) and/or of the concrete wall (20).

2. The use according to claim 1, **characterised in that** the at least one joint plate (31, 32) is electrically connected by means of a mounting (46, 47) with at least one metal bar (11) of the floor slab (10) and/or (21) the concrete wall (20), which mounting (46, 47) supports the at least one joint plate (31, 32) in its envisaged fitted position prior to concreting the floor slab (10).

3. The use according to one of claims 1 - 2, **characterised in that** the at least one joint plate (31, 32) is provided with a non-conductive coating (33) on a partial surface, preferably along a lower area when in the fitted position, and is electrically connected in the area of another partial surface (34) not coated in the same way, preferably along an upper area when in the fitted position.

4. The use according to claim 3, **characterised in that** the non-conductive coating (33) is a coating which forms a water-impermeable connection with green concrete.

5. The use according to one of claims 1 - 4, **characterised in that** several joint plates (31, 32) are joined together and electrically connected with each other.

6. The use according to claim 5, **characterised in that** several joint plates (31, 32) are connected so as to form a closed conductor loop (30).

7. The use according to one of claims 5 or 6, **characterised in that** several joint plates (31, 32) are joined so as to be overlapping each other and in their overlapping area are mechanically held together and/or electrically connected with each other by a terminal (45, 50, 60), respectively.

8. The use according to claim 7, **characterised in that** the terminal (50) comprises a U-shaped clamp (51) made of an electrically conductive metal sheet, into the threaded holes of which preferably four also electrically conductive clamping screws (52) are screwed.

9. The use according to claim 7, **characterised in that** the terminal (60) comprises an electrically conducting square pipe (61), which is provided with two slots (62) aligned with each other, the width of which is less than the overall thickness of two joint plates (36, 37) respectively coated with a coating (38).

10. The use according to one of claims 8 or 9, **characterised in that** the terminal (50, 60) is provided with a clamping strap (54) for connecting a rod-shaped electrical conductor (56).

11. The use according to one of claims 5 - 10, **characterised in that** for bridging an expansion joint, joint plates adjacent thereto are each electrically connected with a ground clip (43) and with each other via an electrical connection between these ground clips.

## Revendications

1. Utilisation d'une tôle couvre-joint électroconductrice, laquelle est encastrée dans un bâtiment avec une plaque de sol (10) bétonnée et une paroi en béton (20) érigée sur celle-ci pour rendre étanche un joint de reprise (A) entre la plaque de sol (10) et la paroi en béton (20) le long du joint de reprise (A) en enjambant celui-ci transversalement, au moins en tant que tronçon d'une ligne de terre (30) pour la mise à la terre des fondations du bâtiment grâce à un raccordement électrique à un autre tronçon de la ligne de terre et/ou à une barrette (41) ou un point fixe de mise à la terre et/ou via une barre de mise à la terre (42) au potentiel de terre et/ou à au moins un fer d'armature (11, 12) de la plaque de sol (10) et/ou de la paroi en béton (20).

2. Utilisation selon la revendication 1, **caractérisée en ce que** cette au moins une tôle couvre-joint (31, 32) est reliée électriquement, au moyen d'une fixation (46, 47), à au moins un fer d'armature (11) de la plaque de sol (10) et/ou (21) de la paroi en béton (20), laquelle fixation (46, 47) soutient cette au moins une tôle couvre-joint (31, 32) dans sa position d'encastrement prévue avant le bétonnage de la plaque de fond (10).

3. Utilisation selon l'une des revendications 1 - 2, **caractérisée en ce que** cette au moins une tôle couvre-joint (31, 32) est munie, sur une surface partielle, de préférence le long d'une zone inférieure dans la position d'encastrement, d'un revêtement (33) non conducteur et est raccordée électriquement, dans la zone d'une autre surface partielle (34) non revêtue de cette manière, de préférence le long d'une zone supérieure dans la position d'encastrement.

4. Utilisation selon la revendication 3, **caractérisée en ce que** le revêtement non conducteur (33) est un revêtement formant une liaison imperméable à l'eau avec du béton frais.

5. Utilisation selon l'une des revendications 1 - 4, **caractérisée en ce que** plusieurs tôles couvre-joint (31, 32) sont placées les unes à côté des autres et sont reliées électriquement les unes aux autres.

6. Utilisation selon la revendication 5, **caractérisée en ce que** plusieurs tôles couvre-joint (31, 32) sont reliées en une boucle conductrice (30) fermée sur elle-même.

7. Utilisation selon l'une des revendications 5 ou 6, **caractérisée en ce que** plusieurs tôles couvre-joint (31, 32) sont placées les unes à côté des autres en se chevauchant et sont respectivement retenues mécaniquement ensemble avec une pince (45, 50, 60) et/ou reliées électriquement ensemble dans leur zone de chevauchement.

8. Utilisation selon la revendication 7, **caractérisée en ce que** la pince (50) présente un crampon (51) en forme de U en une tôle électroconductrice, dans les trous filetés de laquelle de préférence quatre vis de serrage (52) également électroconductrices sont vissées.

9. Utilisation selon la revendication 7, **caractérisée en ce que** la pince (60) présente un tuyau à quatre pants (61) électroconducteur qui est muni de deux fentes (62) s'alignant entre elles dont la largeur est inférieure à l'épaisseur globale de deux tôles couvre-joint (36, 37) respectivement munies d'un revêtement (38).

10. Utilisation selon l'une des revendications 8 ou 9, **caractérisée en ce que** la pince (50, 60) est munie d'une bride de collier (54) pour le raccordement d'un conducteur électrique (56) en forme de tige.

11. Utilisation selon l'une des revendications 5 - 10, **caractérisée en ce que**, pour enjamber un joint de dilatation, des tôles couvre-joint jouxtant celui-ci sont respectivement reliées électriquement ensemble avec un point fixe de mise à la terre (43) et via une liaison électrique entre ces points fixes de mise à la terre.
